(19) **Europäisches Patentamt / European Patent Office / Office européen des brevets**

(11) **EP 2 634 147 B1**

(12) **EUROPEAN PATENT SPECIFICATION**

(45) Date of publication and mention
of the grant of the patent:
**02.05.2018 Bulletin 2018/18**

(51) Int Cl.:
*C01G 19/08* (2006.01)   *C03C 17/00* (2006.01)
*C03C 17/245* (2006.01)

(21) Application number: **12382072.2**

(22) Date of filing: **28.02.2012**

(54) **Stabilized non smoking tin tetrachloride**

Stabilisiertes, nichtrauchendes Zinntetrachlorid

Stabilization de chlorure d'étain(IV)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.09.2013 Bulletin 2013/36**

(73) Proprietors:
• **Segura Ruiz, Pedro**
**30500 Molina de Segura (Murcia) (ES)**
• **Segura Ruiz, Jorge**
**30500 Molina de Segura (Murcia) (ES)**
• **Moya Zayas, Juan**
**30500 Molina de Segura (Murcia) (ES)**

(72) Inventors:
• **Segura Ruiz, Pedro**
**30500 Molina de Segura (Murcia) (ES)**
• **Segura Ruiz, Jorge**
**30500 Molina de Segura (Murcia) (ES)**
• **Moya Zayas, Juan**
**30500 Molina de Segura (Murcia) (ES)**

(74) Representative: **Temiño Ceniceros, Ignacio**
**Calle Amador de los Rios 1-1°**
**28010 Madrid (ES)**

(56) References cited:
**EP-A1- 1 152 040      ES-A1- 2 136 027**
**GB-A- 1 463 125       US-A- 5 536 308**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention**

The present invention refers to a stable composition of stabilized non smoking tin tetrachloride in watery dissolution.

**State of the technique**

The chemical inorganic species derived from the tin can be named as, anhydrous stannic chloride, anhydrous chloride of tin (IV), anhydrous tetrachloride of tin, and chemical formula SnCl4, from now on TCE, is a product of tin that is obtained from direct reaction of the Chlorine gas (Cl2) on the metal (Sn), according to the following chemical reaction:

$$Sn \ (s) + 2 \ Cl_2 \ (g) \rightarrow SnCl_4 \ (l) + Q$$

Under normal conditions, the TCE is a colorless liquid which acquires light yellowish tone that intensifies as greater as the quantity of impurities of Fe (III) that it contains in dissolution.
His smoking character is because of its instability and high hygroscopicity when it enters in contact with the humid air. The amount of TCE vapor that is in balance with the liquid phase at a determined temperature and pressure, in contact with the water present in the air, it reacts rapidly generating oxide of tin (IV) hydrochloric acid vapors HCl according to the following exothermic reaction:

$$SnCl_4 + H_2O \rightarrow HCl(g) + SnO_2 + Q$$

Although there are a lot of utilizations of the TCE, as intermediate of reaction in processes of obtaining of other derivatives of tin and as mordant in dry cleaner's, his principal application for several decades, it is his usefulness as additive in the manufacture of glass bottles.
The TCE in gaseous state produces thin films or coverings (coatings) of SnO2 when it enters in contact with the hot glass surface (newly formed the bottle) that protects the bottle against the friction and abrasion produced by the continuous contact of the glass against the glass in the lines of production of bottles, during the processes of packaging of the products that it contains and also during its transport. It is precisely in this usefulness as additive in the treatment of the surface of the glass where there places the object of our invention.
This instability and high reactivity with the water in the air, give to the TCE characteristics and properties that make it extremely difficult its manipulation or industrial utilization and that it is possible to summarize in the following points:

- The liquid TCE, in contact with the air produces acid smokes that are highly corrosive and irritating for the respiratory system. Prolonged exposures during several minutes can produce pulmonary edema.

- Hydrochloric fumes, that is produced by spontaneous decomposition, produces eye injuries.

- In liquid state it is corrosive to the metals and produces burns in contact with the skin.

- Any accidental spillage produces a great quantity of toxic and corrosive smoke.

- His stocking and utilization needs of complex and costly facilities of safety and maintenance to support his sealing in special containers and to avoid its contact with the humid air.

- In the conductions, through which this liquid passes in its industrial application, systems obstructions are inevitably produced by the formation of SnO2 solidly in its interior, causing problems of application and provoking low performances of production. This requires frequently and costly operations of cleaning and residue management.

- From the environmental point of view, the resultant emissions from the treatments with TCE contain great quantity of volatile chlorides. The current legislation limits the quantity of HCl in milligrams of pollutant per normal cubic meter of air (<30 mg/Nm3) which require the users to support complex and costly systems of neutralization and later management of the resultant residues.

From several decades, also it exist an alternative in the international market to the industrial utilization of the TCE very used as additive to produce superficial coverings of SnO2 in the manufacturing process of glass bottles. It is an organometallic complex, liquid in normal conditions, called monobutil trichloro tin, from now on MBTC.

The main disadvantages that come with the industrial utilization of this product (see SDS Security Data Sheet) can be summarized in the following points:

- High dangerousness by inhalation (see enclosed file about organotins). The presence of organometallic compounds of tin in the way or environment of the workers (work place) must be very controlled reducing considerably the maximum values allowed in relation to the inorganic tin compounds as the TCE. This is because of the inclusion of certain organic compounds of tin in the group of substances considered as CRM (Carcinogenic and Mutagenic). During the process of industrial production of MBTC's, there are also produced others derivatives from the tin such as the dibutil, tributil and tetrabutil tin triclroro in which are replaced two, three and four radical chloride by the correspondents butilo respectively. These compounds must be properly separated by expensive processes of distillation which is extremely complex its total elimination. In the real practice, most of the commercial names of monobutil tricloro tin presents remains of these dangerous compounds and in occasions there have been found formulated opposite to small quantities % p/p of methanol (0,5 % <[MeOH] <2 % that increase its toxicity by inhalation.

- The inhalation of its steams produces, short-term, strong headaches, nauseas and vomits and long exposures can derive in serious affections for the health that there are an object of study in the last years.

- In the conductions along which this liquid passes in its industrial application systems, can take place obstructions by the crystallization in its interior, causing problems of application that can derive in losses of production.

- From the environmental point of view, the resultant emissions of the treatments with MBTC contain large quantity of volatile chlorides. The current legislation limits the amounts of HCl in milligrams of pollutant per normal cubic meter of air (<30 mg/Nm3) which require the users to use complex and costly systems of neutralization and later management of the resultant residues.

GB1463125 describes a composition which discloses a semi-conductive stannic oxide coating consisting of: stannic chloride anhydrous, hydrochloric acid, ethanol, water and antimony thrichloride as doping agent.

ES2136027 discloses a water based composition of tin tetrachloride, trichloroethylene, ethanol and hydrochloric acid.

EP1152040 refers to a coating solution for forming transparent conductive tin oxide film comprising an aqueous solution containing stannic acid as its major component, and a water-soluble polymer having a polar group.

US5536308 discloses a glass coating composition comprising a tin compound and an inorganic acid.

So, there exists the need to provide a stable, homogeneous and non smoking composition of tin tetrachloride anhydrous that does not comprise any toxic compound.

**Description of the invention**

Thus, the present invention, in the first aspect, it refers to a composition based on tin tetrachloride anhydrous (TCE) (from now on composition of the present invention) consisting of:

- At least 5 % of tin tetrachloride anhydrous
- Between 3-15 % in weight of hydrochloric acid in water

or

- At least 5 % of tin tetrachloride anhydrous
- Between 3-15 % in weight of hydrochloric acid in water and
- between 1-45 % in weight of a mixture of aliphatic polyalcohols

In a particular aspect, the mixture of aliphatic polyalcohols of the composition of the present invention includes: monopropilene glycol, dietilene glycol and dipropilene glycol.

In a particular aspect, the inorganic acid in water is in a percentage between 5-8 % in weight.

In a second aspect, the present invention refers to the use of the composition of the present invention as additive in the manufacture of glass containers.

In a third aspect, the present invention refers to a procedure for the preparation of the composition of the present invention characterized because it includes the following steps:

a) To mix in agitation the distilled water with the HCl to obtain a solution with a final concentration comprised between 3-15 % of HCl.

To add the tin tetrachloride anhydrous to the mixture obtained in the step a) and an additional step c) of mixture in agitation of aliphatic polyalcohols in presence of selenium as catalyst, and the addition of this mixture to the solution obtained in the step a). More particularly the mixture of aliphatic polyalcohols includes: monopropilenglicol, dietilenglicol and dipropilenglicol.

In a more particular aspect, the TCE of the step b) is obtained from the tin present in residues of tin-plate.

In a fourth aspect, the present invention refers to a system for covering of glass surfaces with the composition based on tin tetrachloride anhydrous of the present invention, comprising a tunnel through which the glass containers pass to be covered, and that includes a mixer with an air input, an input of the composition based on tin tetrachloride and an outlet for a mixture of the composition based on tin tetrachloride anhydrous and air, being characterized by that it includes a system of regulation of pressure controlling the air input that is connected to the first conduit of the interior of the mixer, a dosing pump controlling the input of the composition based on tin tetrachloride anhydrous connected to the second conduit inside the mixer and an atomizer connected to the output of the mixer, being the atomizer placed in an orifice made in the central part of the tunnel so that the composition based on tin tetrachloride anhydrous and air is pulverized to the interior of the tunnel, so that all the components of the composition based on tin tetrachloride anhydrous immediately go on to vapor phase.

, the present invention disclosesa system (from now on system of the present invention) for the application of the composition of the present invention as covering of glass surfaces, compatible and adapted to the industrial systems of production of glass containers. The system has been created in proportion to the above mentioned product and it can adapt to any system of production of any line of manufacture of glass containers. The composition based on tin tetrachloride anhydrous, object of this invention, is a liquid product at room temperature and it liberates its components when it evaporates. This way is how are produced the deposits of oxide of tin in the external surface of the newly formed glass containers.

The operations of covering of the glass containers takes place inside a tunnel through which the containers pass. The steams of the composition based on TCE are pulverized inside the tunnel, on the external surface of the containers where the oxide of tin remains fixed like superficial covering. The steams are confined in the tunnel to prevent them from escaping to the place of work

In this system of application of the composition based on TCE, the radiant heat of the glass containers is used to produce the evaporation of the components of the product. For the utilization of the product it is mixed with air (it is not necessary to use dry air so that the costs decrease) in a mixer. As is used a mixture of product with air it is necessary to use less quantity of product to obtain the same thickness of covering that with the systems of the state of the technique.

In the systems of the state of the technique, the product is introduced into the tunnel by dripping whereas in the present invention there is done by pulverization which supposes an important advantage of the present system. The product as a fine spray enters inside the tunnel which is at a high temperature and evaporates directly. The spraying carries out in a certain point of the tunnel so as to take advantage of the interior ventilations of the tunnel to drive the projection of the product towards the surface of the product.

The system of application avoids problems of obstruction of the conduits and problems of corrosion are avoided. In addition, it helps to reduce the quantity of residues, to simplify the installations, to increase the performances of production and to reduce the costs of maintenance.

In a particular aspect, in the system of the present invention, all the conduits, the mixer, the compress of the pump and the mouthpiece of the atomizer are made of a plastic material resistant to high temperatures and to the corrosion.

The system includes different measures of safety, like a system of covering applied in the tunnel to avoid the corrosion, a mechanism of control of the temperature to guarantee that there is no pulverization of product if the interior of the tunnel if it is not at the proper temperature and a flow path sensor that controls the passage of product.

In a particular aspect, the interior of the tunnel is covered with silicone resistant to high temperatures and there is placed at the back of the tunnel a plate, made of a plastic material, to avoid the corrosion.

The mechanism of control of the temperature with a thermostat that registers, at any time, the temperature inside the tunnel and which is programmed by a temperature of control below which the mechanism of control interrupts automatically the supply of power to the measuring pump, interrupting the pulverization of mixture of the composition based on TCE and air to the interior of the tunnel. More particularly, the temperature of control is 120°C.

The flow path sensor is placed in the conduit that comes from the dosing pump and activates an alarm in case of not receiving the proper amount of composition based onTCE from the dosing pump (7).

The atomizer of the invention has a mouthpiece with an orifice that allows the passage of the compositon based on TCE mixed with air through the above mentioned mouthpiece up to coming to the interior of the tunnel. The atomizer is specially designed and protected to avoid losses of TCE in the form of drip.

In a fifth aspect, the present invention refers to a method of application of a composition based on tin tetrachloride, implemented in the system of the present invention, which is characterized because it includes the first stage of mixed of the composition based on TCE with air; and the second stage of pulverization of the mixture of the composition based on TCE and air inside the tunnel on the glass containers to be covered.

In a particular aspect of the present invention, the mixing of the composition of the TCE and the air it takes place in the exit of the mixer.

In a particular aspect of the present invention, if the temperature inside the tunnel is less that the predetermined temperature of control, it activates an alarm and it disconnects the dosing of TCE.

In a particular aspect of the present invention, if the flow of the composition based on TCE is less than a pre-established value, the alarm is activated.

## Description of the figures

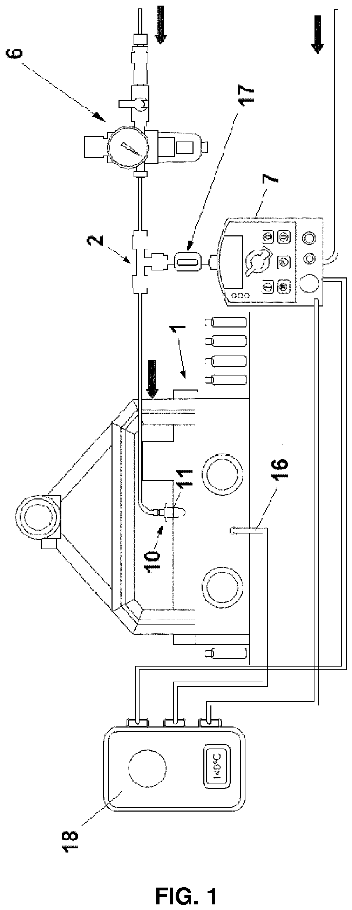

FIG. 1 It shows the system for the application of the composition based on TCE of the present invention.

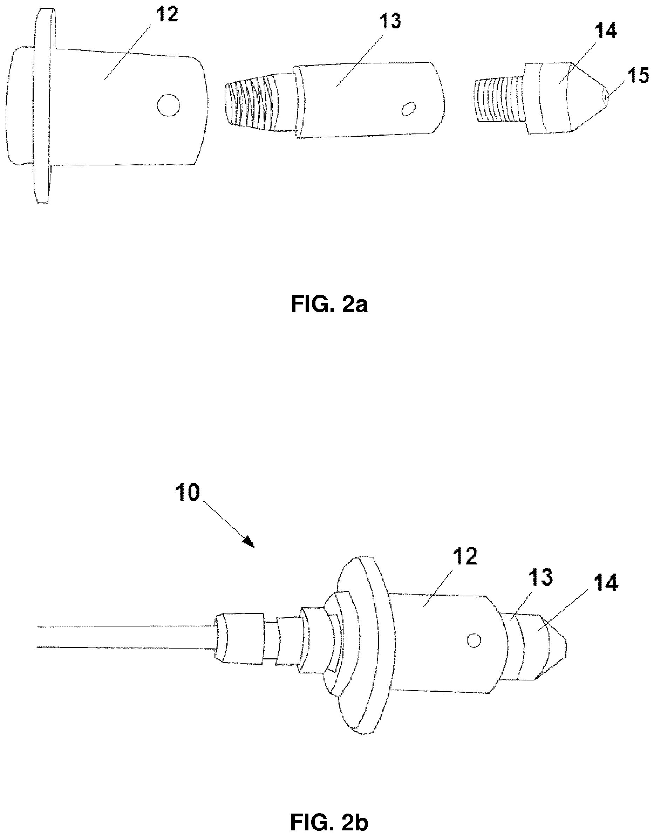

FIG. 2a It shows the atomizer of the system of application in an exploded view in which its different components are seen.

FIG. 2b It shows a view in perspective of the mounted atomizer.

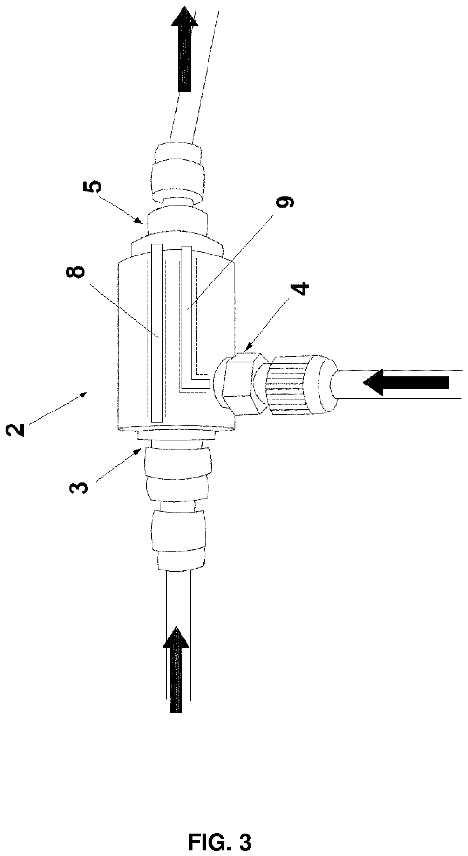

FIG. 3 It shows a view of the mixer of the system of application of the invention.

References:

1:Tunnel; 2:Mixer, 3:Input of air; 4:Input of stabilized not smoking TCE; 5:Output of mixture; 6:System for regulation of the air pressure; 7:Dosing pump, 8:First conduit of the mixer; 9:Second conduit of the mixer; 10:Pulverizer; 11:Hole in the tunnel; 12:Pulverizer body; 13:Adaptator; 14: mouthpiece; 15:Hole of the mouthpiece; 16:Mechanism of the temperature control; 17:Sensor of flow path; 18:Alarm

## Detailed description of the invention

*Example 1: Composition of TCE and method of preparation of 100 Kg stabilized non smoking TCE, without mixture of aliphatic catalyzed polyalcohols.*

- 50% p/p TCE ($SnCl_4$). 50 Kg
- 50% p/p Disolution of HCl (7,5%). 50 Kg

First there were calculated HCl's quantities (33 commercial %) and distilled water that it was necessary to add to obtain 50 Kg of HCl's mixture (7,5 %).

X = Quantity (Kg.) HCl (33% commercial)
Y= Quantity (Kg.) distilled water.

$$X = 50 \text{ Kg} \; \frac{7,5\,\%}{33,0\,\%} \; ; \qquad x = 11,364 \text{ Kg}$$

$$X + Y = 50 \text{ Kg} ; \qquad 11,364 \text{ Kg} + Y = 50 \text{ Kg}; \qquad Y= 30,636 \text{ Kg}$$

We also calculate the quantities in units of volume in the following way:

Density TCE ($SnCl_4$) $d_{TCE}$ : 2,23 Kg/L
Density HCl (33%) $D_{HCl}$ : 1,16 Kg/L
Density of distilled water $d_{water}$ : 1,00 Kg/L

$$\text{Volume of TCE } = \frac{50\,Kg}{2,23\,Kg/L} = 22,422\ L$$

$$\text{Volume of HCl (33\%)} = \frac{11,364\,Kg}{1,16\,Kg/L} = 9,797\ L$$

$$\text{Volume of distilled water} = \frac{30,636\,Kg}{1,00\,Kg/L} = 30,636\ L$$

There were added 11,364 Kg (9,797 L) of HCl (33 commercial %) to 30,636 Kg (30,636 L) of distilled water to the reactor of mixture with agitation, until the heat of reaction of this new dissolution dissipated, that is, until the mixture had the same temperature as the distilled water before be mixed.

50 Kg (22,422 L) of TCE are added slowly to the reactor of mixture, controlling that the temperature was not overcoming the 50 °C. The speed with which this species is introduced in the reactor depended on the speed of cooling. In reactors with circuit of refrigeration this process can be accelerated considerably.

Next we considered the variant that consisted of the incorporation of the TCE directly from the reactors of chlorination of the tinplate. In fact, to have a way of stable and not smoking formulation of the TCE, it allowed solving the enormous number of problems that they presented during the extraction, purification and storage of the TCE.

The utilization of a stream of inert gas of N2 or dry air, once finished the process of production, allowed to incorporate directly 50 Kg of TCE from the reactor of chlorination through a stream of inert gas to the reactor of mixture.

*Example 2: Composition and method of preparation of 100 Kg TCE with mixture of aliphatic catalyzed polyalcohols.*

The composition included the following compounds

- 45% p/p TCE ($SnCl_4$). 45 Kg
- 35% p/p Disolution of HCl (7,5%). 35 Kg
- 20% mixture of polyalcohols. 20 Kg

As in the previous example, there were calculated HCl's quantities (33 commercial %) and distilled water that it was necessary to add to obtain 35 Kg of HCl's mixture (7,5 %).

X = Quantity (Kg.) HCl (33% commercial)
Y= Quantity (Kg.) distilled water.

$$X = 35\ Kg\ \frac{7,5\ \%}{33,0\ \%}\,;\qquad x = 7,955\ Kg$$

$$X + Y = 35\ Kg;\qquad 7,955\ Kg + Y = 35\ Kg;\qquad Y = 27,045\ Kg$$

In units of volume:

Density of TCE ($SnCl_4$) $d_{TCE}$ : 2,23 Kg/L
Density of HCl (33%) $d_{HCl}$ : 1,16 Kg/L
Density of distilled water $d_{water}$ : 1,00 Kg/L

$$\text{Volume of TCE} = \frac{45\,Kg}{2,23\,Kg/L} = 20,179\ L$$

$$\text{Volume of HCl (33\%)} = \frac{7,955\,Kg}{1,16\,Kg/L} = 6,858\ L$$

$$\text{Volume of distilled water} = \frac{27,045\,Kg}{1,00\,Kg/L} = 27,045\ L$$

There were added 7,955 Kg (6,858 L) of HCl (33 commercial %) to 27,045 Kg (27,045 L) of distilled water to the reactor of mixture with agitation, until the heat of reaction dissipated this new dissolution, that is, until the mixture had the same temperature as the distilled water before be mixed.

Later it was prepared in a container apart, 20 Kg of polyalcoholic mixture catalyzed with selenium of: monopropylene glycol, diethylene glycol and dipropylene glycol.

An example of this is the preparation of this mixture with agitation in presence of a catalyst of solid selenium inside a bag that allowed the contact with the liquid mixture of glycols. To prepare 20 Kg of this mixture there were used 9 Kg of Monopropylene glycol, 2 Kg of dietylene glycol and 9 Kg of dipropylene glycol.

There was added the mixture of isomers of aliphatic polyalcohols to the hydrochloric dissolution of 7,5 % previously prepared.

There were slowly added 45 Kg (20,179 L) of TCE to the reactor of mixture, controlling that the temperature did not exceed 50 °C. The speed with which this species is introduced in the reactor depended on the speed of cooling. In reactors with circuit of refrigeration this process can be accelerated considerably.

The system for the application of the composition based on TCE proposed in the present invention is designed for the superficial treatment of the glass, and it is adapted to be used in the industrial systems of production of glass containers.

The system of the present invention for the application of the composition of the present invention as coating of glass surfaces is designed to be placed in a tunnel through which the glass containers passes to be coated, and it includes a mixer with an input of air, an input of TCE and an output for a mixture of composition based on TCE and air. The system is characterized by a set which includes a system of regulation of pressure that controls the input of air, that is connected to the first conduit of the interior of the mixer, a dosing pump controlling the input of composition based on TCE, connected to the second interior conduit of the mixer, and an atomizer connected to the output of the mixer, being the atomizer placed in an orifice made in the central part of the tunnel so that the mixture of composition based on TCE and air is pulverized to the interior of the tunnel so that all the components of the composition based on TCE go immediately to the vapor phase.

The system for the application of composition based on TCE joins a tunnel (1) through which it passes the glass containers that must be covered with the product. In a preferential realization of the invention, all the conduits of the system are made of plastic materials to avoid the corrosion that would take place because of the contact of the composition based on TCE in liquid state with metals. The tunnel (1) is also coated to avoid the corrosion. In a preferential realization of the invention the above mentioned coating is made of silicone, resistant to high temperatures (capable of resisting temperatures of up to 300°C) and there is placed at the back of the tunnel (1) a plate of a plastic of the type PTFE with which to avoid the corrosion. The purpose of the application of these protective caps is to prevent that the interior of the tunnel (1), which is usually made of iron or stainless steel, could be corrode in case of some loss of liquid product.

The composition based on TCE is applied mixed with air. The air used for the mixture is not necessary to be dry, so it reduces the costs. The mixture is made in a mixer (2), that it is a piece with two interior conduits and that, in a preferential realization, it is made of a plastic material. The mixer (2) has two inputs, an input (4) connected to a distribution pump of the composition based on TCE and another input connected to a system of regulation of pressure (3) through which the air passes, and has an output (5) through which the mixture of composition based on TCE with air passes. The interior of the mixer (2) has two conduits, first conduit (8) is connected by an end with the input of air (3) and the other one with the output for the mixture (5), and the second conduit (9) is connected on one side with the input of composition based on TCE (4) and on the other, with the output for the mixture (5). The mixer (2) is made of a plastic material, that in a preferential realization is PTFE. This mixer allows that dosing pumps could be in use to work with lower pressures of 3 bars.

In order to that the system for the application of composition based on TCE of the present invention works properly, it is necessary first to connect the dosing pump (7) up to seeing to go out the composition based on TCE through the output of the mixer (5) that is connected by the atomizer (10). Later there connects the pass of air that passes through the mixer (2) and that it projects the air mixture and composition based on TCE towards the atomizer (10).

If the system for the application of composition based on TCE uses a dosing pump that works at a less pressure of 3 bars, there must be used the mixer (2) previously described but if the dosing pump is of membrane and works to a major pressure that 3 bars, the mixer (2) can be replaced by a fitting in the shape of "T". To facilitate the comprehension of this descriptive memory, the mixing term (2) is used for referring both to the mixer (2), previously described, and to the fitting in "T" whereby the mixer can be replaced if the dosing pump (7) works to more than 3 bars. If it is used a fitting in the shape of "T" one of the inputs is connected to the system of regulation of pressure of the air, other one to the dosing pump, and there is an output through which the air mixture passes with composition based on TCE already made. The quantity of dosed product diminishes when is increased the air pressure.

The headstock of the dosing pump is also made of a plastic material, like all the conduits of the system, to prevent at all time the liquid product from enter in contact with some metallic part, because in liquid state, as consequence of the presence of hydrochloric acid, it has a marked corrosive character opposite to most of the metals. The used plastic material resists the corrosion and temperatures up to 260°C and there is plastic of the type PVDF, PTFE, PE, etc.

The pulverization of the mixture of composition based on TCE and air is realized by an atomizer (10), also made of plastic material specially designed for the present system for the application of composition based on TCE. In a preferential realization of the invention, the mixture pulverizes to a pressure between 0,5 bars and 4 bars. The fact of pulverizing a mixture instead of pulverizing pure composition based on TCE reduces the possibility of obstructions in the atomizer and increases the capacity because it reduces the consumption of composition based on TCE product used to produce certain thicknesses of coating.

This also marks an important difference compared to the systems of application of coatings for the glass, known by the state of the technique, in that the product gets inside the tunnel dripping. Thanks to the pulverization of the present system, the product comes into the tunnel as a fine spray that, when came into the warm chamber of the tunnel (which is at temperatures above 120°C), it evaporates instantly. Thus, all the components of the composition based on TCE passes immediately to vapor phase, decreasing the corrosive factor of TCE that is linked to the contact of the product in liquid state with the metals that forms the structure of the tunnel.

In a preferential realization of the invention, the atomizer (10) includes, the body (12) of the atomizer itself, an adapter (13) which is inserted inside the body (12) of the atomizer and that has a threaded end that stays outside of the body (12) of the atomizer, and a mouthpiece (14) that has an orifice (15) through which the mixture passes to be pulverized inside the tunnel (1). The mouthpiece (14) has an passant orifice (15) which, in a preferential realization, has a diameter between 0,5 mm and 2 mm to obtain a properly pulverization of the product. In a more preferential realization, the diameter of the orifice (15) is 1 mm. The atomizer (10) is placed in an orifice (11) made in the central part of the tunnel designed for this purpose. The atomizer (10) it is possible to be extracted easily from the above mentioned orifice (11) in which is placed to be able to verify the pulverized product when it is necessary.

In an example of realization, the adapter (11) is made of teflon and the mouthpiece (14) includes two threaded plastic pieces with a teflon tape to prevent drips. The threaded end of the adapter joins the evacuation conduit of the mixer (2).

The system of the invention includes a mechanism of control of the temperature (16) that is programmed by a temperature of control below which the mechanism of control of the temperature interrupts automatically the supply of electricity to the dosing pump (7) and thus the supply of product is interrupted to the interior of the tunnel (1). When the mechanism of control of temperature (16) detects that the temperature inside the tunnel (1) exceeds again the value of instruction, there takes place the reestablishment of the electrical supply that feeds the dosing pump (7) and thus the product returns to be pulverized to the interior of the tunnel (1), and the light of alarm turns off.

The mechanism of control of the temperature (16) includes a thermostat which records, at any time, the temperature inside the tunnel measured by a thermocouple that, in a preferential realization of the invention, is a probe of the type PT-100 or a probe of the type K. In a preferential realization the mechanism of control (16) also includes a visual alarm (18) that is activated when there is detected that the temperature inside the tunnel is minor that the value of instruction entered into the system.

This mechanism of control (16) is programmed by a value of instruction for the minimal temperature of work that, in a preferential realization of the invention, is of 120 °C. Thus, it is prevented from which may occur during the pulverization of the mixture with composition based on TCE towards the interior of the tunnel when it is at a temperature (1) that does not allow the immediate evaporation of the components of the composition based on TCE thereby it increases its corrosive power. This circumstance can take place for example due to breakdowns in the assembly line that does that the bottles stop passing through the interior of the tunnel (1).

This system for the application of composition based on TCE also includes a sensor of flow path proceeding (17) from the dosing pump (7), so that there is activated the visual alarm (18) in case of, for some reason, the dosing pump (7) presents some problem that prevents it from dosing the product properly, according to the operation for which it was scheduled.

It is also an object of the present invention the method for the utilization of the system for the application of TCE. Starting from the already mounted system, the method includes the following steps:

- To cover the interior of the tunnel (1) with a material resistant to high temperatures and to the corrosion,
- To connect the dosing pump (7) until the composition based on TCE go out of the mixer (2) through the output (5) for the mixture,
- To connect the system of regulation of the pressure of air (6) until it go out of the mixer (2) by the output (5) forming the mix of composition based on TCE and air,
- To pulverize the mixture of composition based on TCE and air inside the tunnel (1) in which glass bottles are going to be covered.

The method includes a step of cutting the supply of electricity to the dosing pump (7) when the temperature inside the tunnel (1) is minor that a pre-established temperature of control and to activate the alarm (18).

The method also includes a step of activating the alarm (18) when the sensor of step of flow (17) detects that the flow of TCE proceeding from the dosing pump (7) is minor to a pre-established value.

**Claims**

1. A composition based on tin tetrachloride anhydrous consisting of:

   - At least 5 % in weight of tin tetrachloride anhydrous
   - Between 3-15 % in weight of hydrochloric acid in water

   or

   - at least 5% in weight of tin tetrachloride anhydrous
   - between 3-15 % in weight of hydrochloric acid in water and
   - between 1-45 % in weight of a mixture of aliphatic polyalcohols

2. Composition according to the claim 1, where the mixture of aliphatic polyalcohols includes:

   monopropylene glycol, diethylene glycol and dipropylene glycol.

3. Composition according to any of the previous claims, where the HCl in water is in a percentage between 5-8 % in weight.

4. Use of the composition according to any of the previous claims as an additive in the manufacture of glass containers.

5. Procedure for the preparation of the composition according to the claims 1-3 characterized because it includes the following steps:

   a) To mix in agitation the distilled water with the HCl up to obtaining a solution with a final concentration between 3-15 % of HCl,
   b) To add the tetrachloride of tin anhydrous to the mixture obtained in the step a), and optionally,
   c) to mix in agitation of aliphatic polyalcohols in presence of selenium as catalyst, and another later step of addition of the above mentioned mixture to the solution obtained in the step a).

6. Procedure according to the claim 5, where the mixture of aliphatic polyalcohols includes: monopropylene glycol, diethylene glycol and dipropylene glycol.

7. Procedure according to any of the claims 5-6 **characterized by** that the tin tetrachloride anhydrous of the step b) is obtained from the present tin in residues of tin-plate.

8. System for covering of glass surfaces with a composition based on tin tetrachloride anhydrous according to any of the claims 1 to 3, comprising a a tunnel (1) through which the glass containers pass to be covered, and that includes a mixer (2) with an air input (3), an input of composition based on tin tetrachloride anhydrous (4) and an outlet for a mixture (5) of composition based on tin tetrachloride anhydrous and air, being **characterized by** that it includes a system of regulation of pressure (6) controlling the air input that is connected to the first conduit (8) of the interior of the mixer, a dosing pump (7) controlling the input of composition based on tin tetrachloride anhydrous connected to the second conduit (9) inside the mixer and an atomizer (9) connected to the output of the mixer (5), being the atomizer (10) placed in an orifice (11) made in the central part of the tunnel so that the mixture of composition based on tin tetrachloride anhydrous and air is pulverized to the interior of the tunnel, so that all the components of the composition based on tin tetrachloride anhydrous immediately go on to vapor phase.

9. System for covering of glass surfaces with a composition based on tin tetrachloride anhydrous according to the claim 8 wherein the system includes a mechanism for temperature control (16) with a thermostat which it registers at any time the temperature inside the tunnel (1) and that it is programmed by a temperature of control below which the mechanism of control interrupts automatically the supply of electricity to the dosing pump (7), interrupting the pulverization of mixture of composition based on tin tetrachloride anhydrous and air to the interior of the tunnel (1).

10. System according to the claim 9 wherein the temperature of control is 120°C.

11. System according to any of the claims 8 to 10 that it includes a sensor of step of flow proceeding (17) from the dosing pump that activates an alarm in case of there is not received the properly quantity of composition based on tin tetrachloride anhydrous from the dosing pump (7).

12. System according to any of the claims 8 to 11 wherein the atomizer (10) includes a body of the atomizer (12), an adapter (13) that is inserted inside of the above mentioned body (12) and that has a threaded end that remains in the exterior of the body (12) and a mouthpiece (14) that has two pieces crossed by an orifice of the mouthpiece (15) that allows the passage of the composition based on tin tetrachloride anhydrous through it up to coming to the interior of the tunnel.

13. System according to the claim 12 wherein the orifice of the mouthpiece of the atomizer has a diameter of 1 mm.

14. System according to the claim 12 wherein the adapter (13) of the atomizer is made of teflon, and both pieces of the mouthpiece (15) are made of a plastic material covered with teflon that avoids losses of tin tetrachloride anhydrous in the shape of drip.

15. System according to any of the claims 8 to 14 wherein all the conduits, the mixer, the compress of the pump and the mouthpiece of the atomizer are made of a plastic material resistant to high temperatures and to the corrosion.

16. System according to any of the claims 8 to 15 wherein the interior of the tunnel (1) is covered with silicone resistant to high temperatures and there is placed at the back of the tunnel (1) a plate made of a plastic material to avoid the corrosion.

17. Method of application of a composition based on tin tetrachloride anhydrous according to any of claims 1-3, implemented in a system according to any of the claims 8 to 16 which is characterized because it includes the first stage of mixed of composition based on tin tetrachloride anhydrous with air; and the second stage of pulverization of the mixture of composition based on tin tetrachloride anhydrous and air inside the tunnel (1) on the glass containers to be coated.

18. Method according to the claim 17 where the mixing of composition based on tin tetrachloride anhydrous and the air takes place in the exit (5) of the mixer (2).

19. Method according to any of the claims 17 to 18 wherein, if the temperature inside the tunnel is minor that the pre-established temperature of control, an alarm is activated (18) and there is cut the dosing of tin tetrachloride anhydrous.

20. Method according to any of the claims 17 to 19 wherein, if the flow of composition based on tin tetrachloride anhydrous is minor than a pre-established value, the alarm is activated (18).

**Patentansprüche**

1. Zusammensetzung, basierend auf Zinntetrachlorid wasserfrei, bestehend aus:

- mindestens 5 Gew.-% Zinntetrachlorid wasserfrei
- zwischen 3 bis 15 Gew.-% Salzsäure in Wasser

oder

- mindestens 5 Gew.-% Zinntetrachlorid wasserfrei
- zwischen 3 bis 15 Gew.-% Salzsäure in Wasser und
- zwischen 1 bis 45 Gew.-% einer Mischung aus aliphatischen Polyalkoholen.

2. Zusammensetzung nach Anspruch 1, wobei die Mischung aus aliphatischen Polyalkoholen aufweist: Monopropylenglycol, Diethylenglycol und Dipropylenglycol.

3. Zusammensetzung nach einem der vorhergehenden Ansprüche, wobei die HCl in Wasser in einem Anteil von 5 bis 8 Gew.-% vorliegt.

4. Verwendung der Zusammensetzung nach einem der vorhergehenden Ansprüche als ein Additiv bei der Fertigung von Glasbehältern.

5. Vorgang zur Herstellung der Zusammensetzung nach einem der Ansprüche 1 bis 3, **dadurch gekennzeichnet, dass** er die folgenden Schritte beinhaltet:

   a) Mischen durch Rühren des destillierten Wassers mit HCl bis zum Erhalten einer Lösung mit einer Endkonzentration zwischen 3 bis 15 % HCl,
   b) Zugeben des Tetrachlorid Zinn wasserfrei zu der Mischung, die in Schritt a) erhalten wurde, und wahlweise
   c) Mischen durch Rühren der aliphatischen Polyalkohole in Gegenwart von Selen als Katalysator und einen weiteren späteren Schritt der Zugabe der obigen Mischung zu der Lösung, die in Schritt a) erhalten wurde.

6. Vorgang nach Anspruch 5, wobei die Mischung aus aliphatischen Polyalkoholen aufweist: Monopropylenglycol, Diethylenglycol und Dipropylenglycol.

7. Vorgang nach einem der Ansprüche 5 bis 6, **dadurch gekennzeichnet, dass** das Zinntetrachlorid wasserfrei aus Schritt b) aus dem Zinn erhalten wird, das in Rückständen der Zinnplatte vorhanden ist.

8. System zum Bedecken von Glasoberflächen mit einer Zusammensetzung, die auf Zinntetrachlorid wasserfrei nach einem der Ansprüche 1 bis 3 basiert, umfassend einen Tunnel (1), durch den die abzudeckenden Glasbehälter laufen und der einen Mischer (2) mit einem Lufteingang (3) aufweist, wobei ein Eingang der Zusammensetzung auf Zinntetrachlorid wasserfrei (4) basiert und ein Ausgang für eine Mischung (5) der Zusammensetzung auf Zinntetrachlorid wasserfrei und Luft basiert, **dadurch gekennzeichnet, dass** es ein System zum Regeln des Drucks (6) aufweist, das den Lufteingang steuert, der mit der ersten Rohrleitung (8) des Innenraums des Mischers verbunden ist, eine Dosierpumpe (7), die den Eingang der Zusammensetzung basierend auf Zinntetrachlorid wasserfrei steuert, der mit der zweiten Rohrleitung (9) innerhalb des Mischers verbunden ist, und einen Zerstäuber (9), der mit dem Ausgang des Mischers (5) verbunden ist, wobei der Zerstäuber (10) in einer Öffnung (11) angeordnet ist, die in dem mittleren Teil des Tunnels hergestellt ist, sodass die Mischung der Zusammensetzung, die auf Zinntetrachlorid wasserfrei und Luft basiert, in den Innenraum des Tunnels zerstäubt wird, sodass alle Bestandteile der Zusammensetzung, die auf Zinntetrachlorid wasserfrei basieren, unverzüglich in die Dampfphase gehen.

9. System zum Abdecken von Glasoberflächen mit einer Zusammensetzung, die auf Zinntetrachlorid wasserfrei nach Anspruch 8 basiert, wobei das System einen Mechanismus zur Temperatursteuerung (16) mit einem Thermostat aufweist, das die Temperatur innerhalb des Tunnels (1) zu jeder Zeit registriert und das durch eine Steuertemperatur programmiert ist, unterhalb welcher der Mechanismus der Steuerung automatisch die Versorgung der Dosierpumpe (7) mit Elektrizität unterbricht und die Zerstäubung der Mischung der Zusammensetzung, die auf Tetrachlorid wasserfrei und Luft basiert, in den Innenraum des Tunnels (1) unterbricht.

10. System nach Anspruch 9, wobei die Steuertemperatur 120°C beträgt.

11. System nach einem der Ansprüche 8 bis 10, das einen Schrittsensor der Strömungsverarbeitung (17) von der Dosierpumpe aufweist, die einen Alarm in dem Fall auslöst, dass nicht die angemessene Menge der Zusammensetzung basierend auf dem Zinntetrachlorid wasserfrei von der Dosierpumpe (7) empfangen wurde.

12. System nach einem der Ansprüche 8 bis 11, wobei der Zerstäuber (10) einen Körper des Zerstäubers (12), einen Adapter (13), der in diesen Körper (12) eingesetzt ist und der ein Gewindeende aufweist, das an der Außenseite des Körpers (12) verbleibt, und ein Mundstück (14) aufweist, das zwei Stücke aufweist, die von einer Öffnung des Mundstücks (15) durchquert werden, das den Durchgang der Zusammensetzung basierend auf Zinntetrachlorid wasserfrei dadurch bis zum Gelangen in den Innenraum des Tunnels aufweist.

13. System nach Anspruch 12, wobei die Öffnung des Mundstücks des Zerstäubers einen Durchmesser von 1 mm aufweist.

14. System nach Anspruch 12, wobei der Adapter (13) des Zerstäubers aus Teflon hergestellt ist, und beide Stücke des Mundstücks (15) aus einem Kunststoffmaterial hergestellt sind, das mit Teflon bedeckt ist, der Verluste von Zinntetrachlorid wasserfrei in Form eines Tropfes vermeidet.

**15.** System nach einem der Ansprüche 8 bis 14, wobei alle Rohrleitungen, der Mischer, die Pumpenkompresse und das Mundstück des Zerstäubers aus einem Kunststoffmaterial hergestellt sind, das hohen Temperaturen und Korrosion standhält.

**16.** System nach einem der Ansprüche 8 bis 15, wobei der Innenraum des Tunnels (1) mit Silikon bedeckt ist, das hohen Temperaturen standhält und an der Rückseite Tunnels (1) eine Platte angeordnet ist, die aus einem Kunststoffmaterial hergestellt ist, um Korrosion zu vermeiden.

**17.** Verfahren zum Auftragen einer Zusammensetzung, die auf Zinntetrachlorid wasserfrei nach einem der Ansprüche 1 bis 3 basiert, das in einem System nach einem der Ansprüche 8 bis 16 implementiert ist, **dadurch gekennzeichnet, dass** es die erste Stufe einer Mischung einer Zusammensetzung basierend auf Zinntetrachlorid wasserfrei mit Luft; und die zweite Stufe der Zerstäubung der Mischung der Zusammensetzung basierend auf Zinntetrachlorid wasserfrei und Luft innerhalb des Tunnels (1) auf den zu beschichtenden Glasbehältern beinhaltet.

**18.** Verfahren nach Anspruch 17, wobei die Mischung der Zusammensetzung basierend auf Zinntetrachlorid wasserfrei und Luft im Ausgang (5) des Mischers (2) erfolgt.

**19.** Verfahren nach einem der Ansprüche 17 bis 18, wobei, wenn die Temperatur innerhalb des Tunnels kleiner als die voreingestellte Steuertemperatur ist, ein Alarm aktiviert (18) wird und die Dosierung von Zinntetrachlorid wasserfrei unterbrochen wird.

**20.** Verfahren nach einem der Ansprüche 17 bis 19, wobei, wenn die Strömung der Zusammensetzung basierend auf Zinntetrachlorid wasserfrei kleiner als ein voreingestellter Wert ist, der Alarm aktiviert (18) wird.

## Revendications

**1.** Composition à base de tétrachlorure d'étain anhydre consistant en :

- Au moins 5 % en poids de tétrachlorure d'étain anhydre
- Entre 3-15 % en poids d'acide chlorhydrique dans de l'eau

ou

- au moins 5 % en poids de tétrachlorure d'étain anhydre
- entre 3-15 % en poids d'acide chlorhydrique dans de l'eau et
- entre 1-45 % en poids d'un mélange de polyalcools aliphatiques

**2.** Composition selon la revendication 1, où le mélange de polyalcools aliphatiques comporte : le monopropylène glycol, le diéthylène glycol et le dipropylène glycol.

**3.** Composition selon l'une quelconque des revendications précédentes, où le HCl dans de l'eau est dans un pourcentage entre 5-8 % en poids.

**4.** Utilisation de la composition selon l'une quelconque des revendications précédentes telle qu'un additif dans la fabrication de récipients en verre.

**5.** Procédure pour la préparation de la composition selon les revendications 1-3 **caractérisée en ce qu'**elle comporte les étapes suivantes :

a) Pour mélanger en agitation l'eau distillée avec le HCl jusqu'à obtenir une solution avec une concentration finale entre 3-15 % en HCl,
b) Pour ajouter le tétrachlorure d'étain anhydre au mélange obtenu dans l'étape a), et optionnellement,
c) pour mélanger en agitation les polyalcools aliphatiques en présence de sélénium comme catalyseur, et une autre étape ultérieure consistant à ajouter le mélange mentionné ci-dessus à la solution obtenue dans l'étape a).

**6.** Procédure selon la revendication 5, où le mélange de polyalcools aliphatiques comporte : le monopropylène glycol, le diéthylène glycol et le dipropylène glycol.

7.  Procédure selon l'une quelconque des revendications 5-6 **caractérisée en ce que** le tétrachlorure d'étain anhydre de l'étape b) est obtenu à partir de l'étain présent dans les résidus de fer blanc.

8.  Système pour recouvrir les surfaces en verre d'une composition à base de tétrachlorure d'étain anhydre selon l'une quelconque des revendications 1 à 3, comprenant un tunnel (1) par lequel les récipients en verre passent pour être recouverts, et qui comporte un mélangeur (2) avec une entrée d'air (3), une entrée de composition à base de tétrachlorure d'étain anhydre (4) et une sortie pour un mélange (5) de composition à base de tétrachlorure d'étain anhydre et d'air, étant **caractérisé en ce qu'**il comporte un système de régulation de la pression (6) contrôlant l'entrée d'air qui est raccordé au premier conduit (8) de l'intérieur du mélangeur, une pompe de dosage (7) contrôlant l'entrée de composition à base de tétrachlorure d'étain anhydre raccordé au deuxième conduit (9) à l'intérieur du mélangeur et un pulvérisateur (9) raccordé à la sortie du mélangeur (5), le pulvérisateur (10) étant placé dans un orifice (11) fait dans la partie centrale du tunnel de sorte que le mélange de composition à base de tétrachlorure d'étain anhydre et d'air soit pulvérisé à l'intérieur du tunnel, de sorte que tous les composants de la composition à base de tétrachlorure d'étain anhydre passent à la phase de vapeur.

9.  Système pour recouvrir les surfaces en verre d'une composition à base de tétrachlorure d'étain anhydre selon la revendication 8 dans lequel le système comporte un mécanisme pour le contrôle de la température (16) avec un thermostat qui enregistre n'importe quand la température à l'intérieur du tunnel (1) et qui est programmé par une température de contrôle en dessous de laquelle le mécanisme de contrôle interrompt automatiquement l'approvisionnement en électricité de la pompe de dosage (7), interrompant la pulvérisation de mélange de composition à base de tétrachlorure d'étain anhydre et d'air à l'intérieur du tunnel (1).

10. Système selon la revendication 9 dans lequel la température de contrôle est de 120 °C.

11. Système selon l'une quelconque des revendications 8 à 10 qui comporte un capteur de l'étape consistant à procéder à l'écoulement (17) depuis la pompe de dosage qui active une alarme au cas où il ne recevrait pas la bonne quantité de composition à base de tétrachlorure d'étain anhydre depuis la pompe de dosage (7).

12. Système selon l'une quelconque des revendications 8 à 11 dans lequel le pulvérisateur (10) comporte un corps du pulvérisateur (12), un adaptateur (13) qui est inséré à l'intérieur du corps mentionné ci-dessus (12) et qui a une extrémité filetée qui reste à l'extérieur du corps (12) et un embout (14) qui a deux pièces traversées par un orifice de l'embout (15) qui permet le passage de la composition à base de tétrachlorure d'étain anhydre par lui jusqu'à venir à l'intérieur du tunnel.

13. Système selon la revendication 12 dans lequel l'orifice de l'embout du pulvérisateur a un diamètre de 1 mm.

14. Système selon la revendication 12 dans lequel l'adaptateur (13) du pulvérisateur est fait en téflon, et les deux pièces de l'embout (15) sont faites en matière plastique recouvertes de téflon qui évite les pertes de tétrachlorure d'étain anhydre sous la forme de goutte.

15. Système selon l'une quelconque des revendications 8 à 14 dans lequel tous les conduits, le mélangeur, la compresse de la pompe et l'embout du pulvérisateur sont faits en matière plastique résistant aux fortes températures et à la corrosion.

16. Système selon l'une quelconque des revendications 8 à 15 dans lequel l'intérieur du tunnel (1) est recouvert de silicone résistant aux fortes températures et une plaque réalisée en matière plastique est placée à l'arrière du tunnel (1) pour éviter la corrosion.

17. Procédé d'application d'une composition à base de tétrachlorure d'étain anhydre selon l'une quelconque des revendications 1-3, mis en oeuvre dans un système selon l'une quelconque des revendications 8 à 16 qui est caractérisé parce qu'il comporte la première étape consistant à mélanger la composition à base de tétrachlorure d'étain anhydre avec l'air ; et la deuxième étape consistant à pulvériser le mélange de composition à base de tétrachlorure d'étain anhydre et d'air à l'intérieur du tunnel (1) sur les récipients en verre à enduire.

18. Procédé selon la revendication 17 où le mélange de composition à base de tétrachlorure d'étain anhydre et d'air a lieu à la sortie (5) du mélangeur (2).

19. Procédé selon l'une quelconque des revendications 17 à 18 dans lequel, si la température à l'intérieur du tunnel est plus faible que la température préétablie de contrôle, une alarme est activée (18) et il y a une réduction du dosage de tétrachlorure d'étain anhydre.

20. Procédé selon l'une quelconque des revendications 17 à 19 dans lequel, si l'écoulement de composition à base de tétrachlorure d'étain anhydre est plus faible qu'une valeur préétablie, l'alarme est activée (18).

FIG. 1

FIG. 2a

FIG. 2b

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1463125 A
- ES 2136027
- EP 1152040 A
- US 5536308 A